# DEMANDE DE BREVET EUROPEEN

(11) **EP 4 053 395 A1**
(43) Date de publication de la demande: **07.09.2022**
(21) Numéro de dépôt: 22158832.0
(22) Date de dépôt: 25.02.2022
(51) Int. Cl.: F03B 13/06, E21B 41/00, F03G 7/04, F03B 13/02, E21B 43/34, F03G 4/00

(54) **PROCÉDÉ DE PRODUCTION D'ÉLECTRICITÉ DANS UNE PLATEFORME PÉTROLIÈRE ET INSTALLATION DE MISE EN OEUVRE**

(30) Priorité: 03.03.2021 FR 2102064
(71) Demandeur: Oil2Green, 73100 Aix-les-Bains (FR)
(72) Inventeur: PEVIANI, Gianluca, 73100 Aix-les-Bains (FR)
(74) Mandataire: Rataboul, Xavier

(57) **Abrégé**

L'invention concerne un procédé de production d'électricité à partir d'une plateforme pétrolière existante agencée pour extraire de l'huile pétrolifère depuis une nappe souterraine.

Le procédé comprend les étapes suivantes :
a) on extrait par une première tubulure d'extraction (11) un mélange d'huile pétrolifère et d'eau issu de la nappe souterraine sous une pression P2 ;
d) on fait circuler le mélange extrait de manière à actionner par énergie cinétique une turbine génératrice d'électricité pour générer de l'électricité ;
e) on alimente un réseau électrique avec au moins une fraction de l'électricité générée par la turbine génératrice.

## Description

L'invention se rapporte à un procédé de production d'électricité dans une plateforme pétrolière existante et à une installation de mise en oeuvre. L'invention s'applique à une installation en mer, sous réserve que la plateforme soit fixe, c'est-à-dire non flottante. L'invention s'applique aussi à une installation sur terre.

Pendant la phase de production et de commercialisation d'une plateforme pétrolière en mer (off-shore) ou sur terre (on-shore), un puits de pétrole extrait de la nappe pétrolifère, via une première tubulure, un mélange essentiellement constitué d'huile pétrolifère, d'eau et de gaz. Cette extraction se fait naturellement, car la nappe pétrolifère est à une pression supérieure à la pression atmosphérique, de sorte que le mélange a naturellement tendance à remonter vers la plateforme, avec des pressions entre 100 et 700 bars.

Pour maintenir cette extraction dans le temps, il est nécessaire de maintenir la pression au sein de la nappe, de sorte que les plateformes sont équipées de pompes d'injection qui injectent le fluide extrait via une deuxième tubulure, ce qui permet, in fine, la remontée du mélange via la première tubulure. Si nécessaire, un fluide extracteur peut être injecté tels un gaz (par exemple du CO2 ou du H2S), une partie de l'eau provenant du mélange extrait préalablement ou de l'eau de mer.

En moyenne, pendant la phase économiquement rentable de l'installation pétrolière, il est reconnu que pour un baril de pétrole produit en surface depuis le mélange issu du gisement, environ trois barils d'eau sont aussi rapportés en surface. Les gisements sont différents l'un de l'autre et produisent des mélanges différents, c'est-à-dire ayant des proportions huile/eau et des débits différents.

En fonction de sa qualité, et donc de son rapport huile/eau, le mélange extrait passe au travers d'un séparateur huile/eau pour séparer l'huile pétrolifère et l'eau.

Actuellement l'eau issue de cette séparation est le plus souvent reversée dans l'océan ou réinjectée dans le gisement ou partiellement réutilisée dans d'autres postes.

La plateforme pétrolière est exploitée tant que le rapport huile/eau reste supérieur à une valeur seuil, fonction de la rentabilité économique. Au cours de l'exploitation de la nappe pétrolifère, ce rapport devient de plus en plus faible, de sorte que plus d'eau que d'huile est extraite. Le gisement s'épuise au fur et à mesure et en dessous de la valeur seuil, l'extraction d'huile n'est plus rentable commercialement. La société exploitante arrête les opérations d'extraction et la plateforme est soit abandonnée en attente d'utilisation, soit le plus souvent démontée. Cette opération est longue et très coûteuse.

Un objectif de la présente invention est de pouvoir prolonger la durée d'exploitation d'une plateforme d'extraction pétrolière tout en permettant une réhabilitation utile, rentable et en permettant la production d'électricité propre vis-à-vis de l'environnement, flexible, à la demande et non intermittente.

Un autre objectif de la présente invention est de proposer un procédé polyvalent, c'est-à-dire adaptable à la qualité du mélange issu de la nappe pétrolifère.

L'idée qui sous-tend l'invention est de modifier une plateforme existante pour créer une boucle de circulation du mélange extrait de la nappe et d'utiliser l'énergie cinétique créée par la pression du jet du mélange (eau, fluide non huileux ou gaz (CO2)) sortant depuis la nappe pétrolifère épuisée pour générer au moyen d'une turbine hydroélectrique de l'électricité qui pourra être envoyée dans un réseau électrique ou stockée dans des batteries, tout en réalimentant la nappe et en maintenant sa pression. L'invention permet donc de modifier une plateforme non utilisée en une centrale hydroélectrique flexible et disponible à fournir l'énergie électrique à la demande.

L'invention a plus précisément pour objet un procédé de production d'électricité avec une installation d'extraction pétrolière existante agencée pour extraire de l'huile pétrolifère et de l'eau à partir d'une nappe souterraine, le procédé comprenant les étapes suivantes :
a) on extrait par une première tubulure d'extraction un mélange d'huile pétrolifère et d'eau issu de la nappe souterraine sous une pression P2 ;
d) on fait circuler le mélange extrait de manière à actionner par énergie cinétique une turbine génératrice d'électricité pour générer de l'électricité ;
e) on alimente un réseau électrique avec au moins une fraction de l'électricité générée par la turbine génératrice.

Selon des formes de réalisation particulières :
- le procédé peut comprendre, entre l'étape a) et l'étape d), une étape b) de séparation de l'huile pétrolifère et de l'eau lorsque le rapport huile/eau dans le mélange issu de la nappe est supérieur à une valeur seuil déterminée, et une étape c) de stockage temporaire de l'eau obtenue à une hauteur minimale déterminée par rapport à la turbine génératrice ;
- le procédé peut comprendre, en outre, une étape f) d'injection d'un fluide extracteur sous une pression P1 dans la nappe souterraine avec une pompe d'injection, via une deuxième tubulure d'injection ;
- la pression P1 peut être ajustée pour maintenir la pression P2 à une valeur déterminée pour actionner par énergie cinétique la turbine génératrice d'électricité pour générer de l'électricité ;
- le fluide extracteur peut comprendre au moins une partie du mélange extrait à l'étape a) ;
- on peut alimenter en électricité la pompe d'injection avec au moins une fraction de l'électricité générée par la turbine génératrice, pour répéter les étapes a) à e) ;
- le fluide extracteur peut comprendre du gaz CO2, une partie du mélange extrait, et/ou de l'eau de mer;
- le réseau électrique peut comprendre un organe de stockage d'électricité : et/ou
- les étapes b) et c) peuvent être supprimées lorsque la proportion d'huile dans le mélange extrait devient inférieure à la valeur seuil déterminée.

L'invention a également pour objet un équipement de production d'électricité pour une installation d'extraction pétrolière existante, agencée pour extraire un mélange d'huile pétrolifère et d'eau à partir d'une nappe souterraine, l'installation d'extraction pétrolière comprenant une première tubulure d'extraction du mélange d'huile et d'eau issu de la nappe souterraine sous une pression P2, l'équipement comprenant :
- une turbine génératrice d'électricité en connexion fluidique avec la première tubulure, et actionnable par énergie cinétique lorsque du mélange extrait de la nappe souterraine la traverse pour générer de l'électricité ;
- un circuit électrique entre la turbine et un organe de stockage et/ou de transmission de l'électricité générée par la turbine.

Selon des formes de réalisation particulières :
- l'équipement peut comprendre, en outre, avant la turbine génératrice, un séparateur eau/huile pétrolifère duquel partent une conduite d'huile pétrolifère vers un réservoir d'huile pétrolifère, et une conduite d'eau vers un réservoir d'eau, le réservoir d'eau étant relié de manière fluidique par une tubulure à la turbine génératrice, et agencé à une hauteur déterminée par rapport à la turbine génératrice pour que l'eau tombe par gravité dans la turbine génératrice et l'actionne par énergie cinétique ;
- l'équipement peut comprendre, en outre, une conduite de contournement reliée par une vanne d'une part à la première tubulure avant le séparateur eau/huile et d'autre part à la tubulure alimentant la turbine génératrice depuis le réservoir d'eau ;
- l'équipement peut comprendre, en outre, une conduite de contournement reliée par une vanne d'une part à la première tubulure avant le séparateur eau/huile et d'autre part au réservoir d'eau ;
- l'équipement peut comprendre, en outre, une conduite de contournement reliée par une vanne d'une part à la première tubulure avant le séparateur eau/huile et d'autre part à la turbine génératrice ;
- l'équipement peut comprendre, en outre, au moins un capteur de la composition du mélange extrait et une unité centrale programmée pour déterminer le rapport huile/eau dans le mélange extrait, le comparer à une valeur seuil déterminée stockée en mémoire, et pour commander les vannes de manière à faire circuler le mélange extrait via la conduite de contournement directement depuis la première tubulure d'extraction vers la turbine génératrice lorsque le rapport huile/eau dans le mélange extrait est inférieur à la valeur seuil déterminée ;
- l'équipement peut comprendre, en outre, une pompe d'injection de fluide extracteur sous une pression P1 par une deuxième tubulure d'injection dans la nappe souterraine, la première tubulure étant reliée de manière fluidique à la pompe d'injection pour former une boucle de circulation fluidique entrant et sortant de la nappe souterraine ; et/ou
- la turbine génératrice peut être une turbine de type axial, ou de type Pelton ;
- la turbine génératrice peut être une turbine choisie parmi les turbines de type Kaplan, de type Francis, et de type axial.

D'autres caractéristiques de l'invention seront énoncées dans la description détaillée ci-après faite en référence aux figures annexées, données à titre d'exemple, et qui représentent, respectivement :
[Fig. 1], une vue schématique d'une installation selon l'invention, comprenant une turbine génératrice d'électricité immergée au fond de la mer;
[Fig. 2], une vue schématique d'une installation selon l'invention, comprenant une turbine génératrice d'électricité agencée sur la plateforme ;
[Fig. 3], une vue schématique d'une installation selon l'invention, comprenant un séparateur et un réservoir d'eau en amont de la turbine génératrice.
[Fig. 4], une vue schématique d'une installation similaire à celle de la figure 3 et comprenant, en outre, une conduite de contournement.

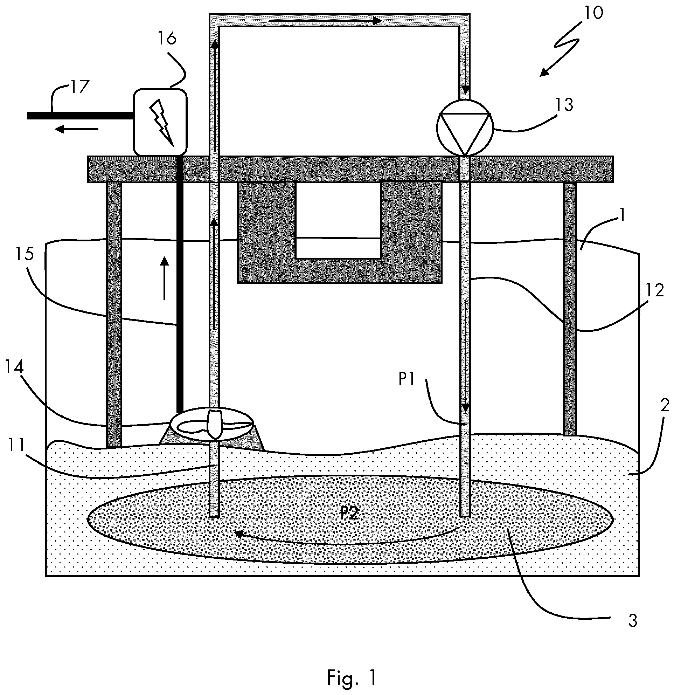

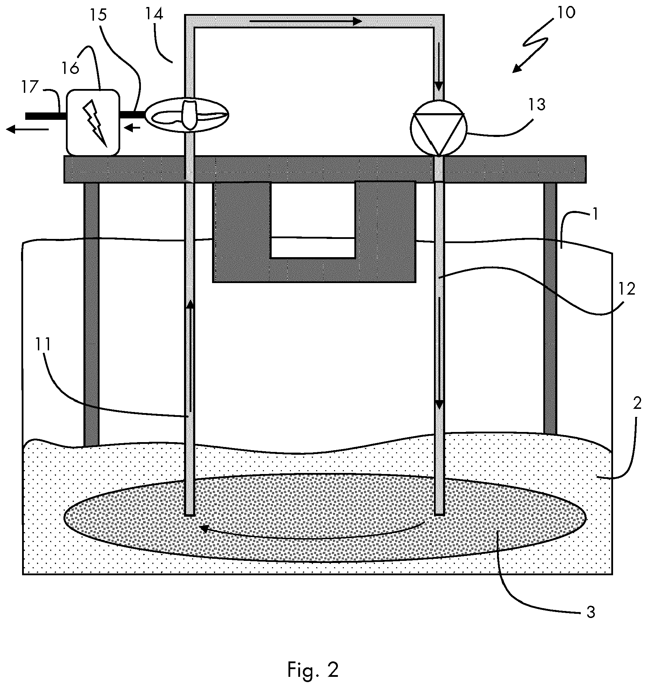

Les figures 1 à 4 illustrent des modes de réalisation se rapportant à une plateforme pétrolière en mer, ou off-shore. Bien entendu, l'équipement selon l'invention illustré aux figures 2 à 4 est adaptable à une installation pétrolière sur terre, ou on-shore.

La figure 1 illustre un équipement de production d'électricité selon l'invention agencé sur une plateforme pétrolière 10 préexistante, positionnée et installée pour extraire un mélange d'huile pétrolifère et d'eau à partir d'une nappe souterraine 3 localisée sous le fond 2 de la mer 1.

La plateforme pétrolière 10 comprend une première tubulure d'extraction 11 du mélange d'huile et d'eau issu de la nappe souterraine 3 sous une pression P2 qui permet l'extraction naturelle du mélange. La première tubulure 11 relie donc de manière fluidique la nappe souterraine 3 et la plateforme 10. À titre indicatif, les tubes de la première tubulure 11 présentent un diamètre compris entre 15 et 55 cm.

Afin de compenser la diminution de la pression due à l'extraction, la plateforme comprend une pompe d'injection 13 de fluide extracteur sous une pression P1 via une deuxième tubulure d'injection 12 dans la nappe souterraine 3. Habituellement, le fluide extracteur peut être un gaz, tel que du CO2, une partie de l'eau provenant du mélange extrait préalablement et dont l'huile pétrolifère a été extraite, ou de l'eau de mer.

Comme expliqué précédemment, le mélange extrait est plus ou moins riche en huile pétrolifère et tend, au fur et à mesure de l'exploitation, à s'appauvrir en huile pétrolifère. Quand le rapport huile pétrolifère/eau arrive sous le seuil de rentabilité économique, la mise en œuvre de l'invention est utile pour générer de l'électricité de manière durable, grâce à une source flexible et non intermittente.

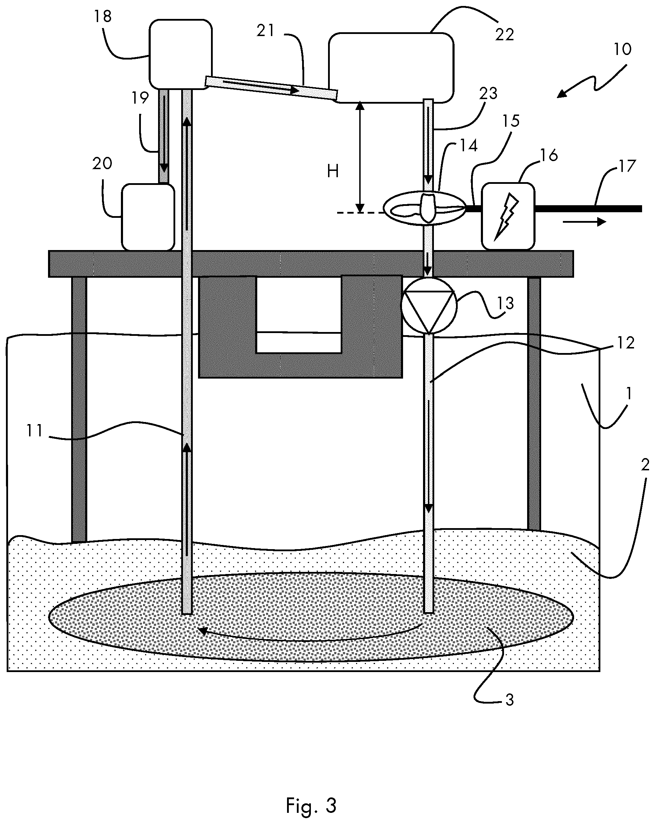

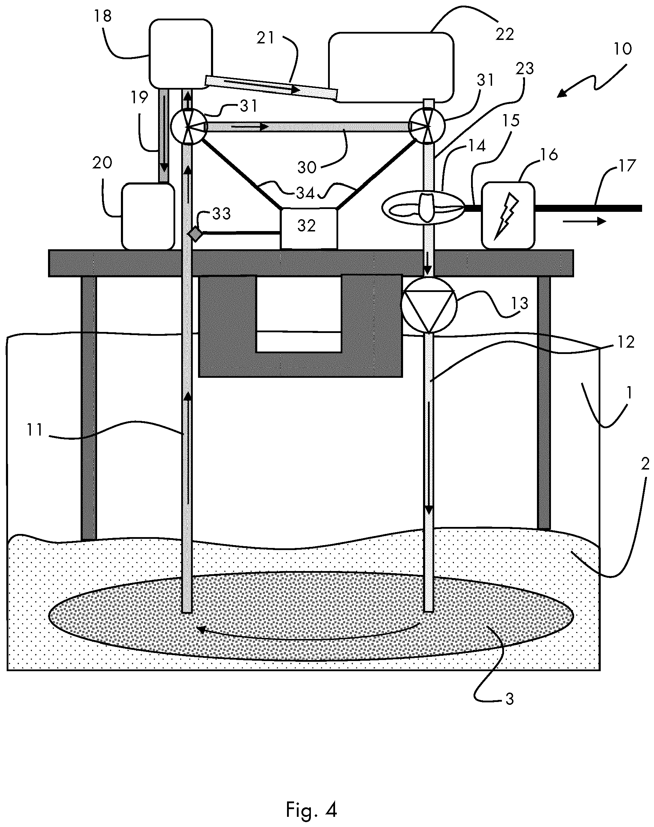

L'invention est très polyvalente, car elle peut être mise en œuvre même lorsque le mélange contient encore de l'huile, comme expliqué pour le deuxième mode de réalisation illustré aux figures 3 et 4. Le premier mode de réalisation illustré aux figures 1 et 2 concerne la situation dans laquelle le mélange huile pétrolifère/ eau est très pauvre en huile, de sorte que l'on peut considérer qu'il contient essentiellement de l'eau. Dans ce cas, le fluide extracteur utilisé pour compenser la perte de pression au sein de la nappe est constitué par le fluide directement extrait, de sorte que le fluide injecté est identique au fluide extrait.

La deuxième tubulure relie donc de manière fluidique la plateforme 10 et la nappe souterraine 3.

Avantageusement, la pression P1 est réglable pour maintenir la pression P2 à la valeur voulue pour la mise en œuvre du procédé selon l'invention (en particulier pour le turbinage tel qu'il sera décrit par la suite).

Selon l'invention, la première tubulure 11 est reliée directement (figures 1 et 2) ou indirectement (figures 3 et 4) de manière fluidique à la turbine 14 et à la pompe d'injection 13 pour former une boucle de circulation fluidique entrante et sortant de la nappe souterraine 3.

L'équipement selon l'invention comprend, en outre, en connexion fluidique avec la première tubulure 11, en amont de la pompe d'injection 13 et en aval de la nappe souterraine 3, une turbine génératrice 14 d'électricité actionnable par énergie cinétique lorsque du fluide la traverse pour générer de l'électricité. On entend par turbine génératrice, dans la présente invention, un module de puissance comprenant une turbine et un générateur.

Sur la figure 1, cette turbine 14 est posée sur le fond 2 de la mer 1 de sorte qu'elle reçoit le mélange extrait de la nappe à une pression très proche de la pression P2 de la nappe 3. En d'autres termes, l'énergie cinétique de mélange est maximale et la production d'électricité est optimisée. En outre, ce mode de réalisation permet d'utiliser plusieurs puits en fond de mer qui envoient le mélange extrait vers une seule plateforme, ce qui permet de multiplier des petites installations sur le fond de mer pour exploiter les meilleurs puits.

Sur la figure 2, la turbine 14 est agencée en surface et fixée à la plateforme 10.

De préférence, une valve est placée entre la tête de puits et la turbine 14 afin que le système de production d'énergie électrique soit rendu flexible et disponible à la demande.

Dans tous les cas, l'équipement selon l'invention comprend un circuit électrique 15 agencé entre la turbine 14 et un organe 16 de stockage (avec des batteries par exemple) et/ou de transmission de l'électricité générée par la turbine 14 vers le réseau électrique général 17.

Cet équipement permet de fabriquer de l'électricité de la manière suivante : on commence par extraire par une première tubulure d'extraction 11 un mélange d'huile pétrolifère et d'eau issu de la nappe souterraine sous une pression P2. Avantageusement, ce mélange est analysé avant l'étape suivante pour s'assurer du bon fonctionnement de la turbine.

Puis, on fait circuler le mélange extrait de manière à actionner par énergie cinétique la turbine génératrice d'électricité 14 pour générer de l'électricité.

Ensuite, on alimente un organe 16 de stockage (avec des batteries par exemple, en vue d'une utilisation ultérieure sur la plateforme ou d'alimentation ultérieure du réseau électrique 17) et/ou on transmet directement l'électricité générée par la turbine 14 vers le réseau électrique général 17 avec au moins une fraction de l'électricité générée par la turbine génératrice. De préférence, la majorité de l'électricité produite est injectée dans le réseau ou stockée, le reste servant à alimenter la pompe d'injection 13 du fluide extracteur. Dans ce cas préféré, on injecte alors du fluide extracteur sous une pression P1 dans la nappe souterraine avec la pompe d'injection, via la deuxième tubulure d'injection 12. Cette étape sert à maintenir la pression au sein de la nappe à des valeurs utiles pour le fonctionnement de la turbine 14.

On répète alors cycliquement les étapes précitées.

L'installation des figures 1 et 2 est valable lorsque le mélange extrait de la nappe souterraine 3 est pauvre en huile pétrolifère, roches et autres produits, et donc riche en eau de bonne qualité pour la turbine. Un tel mélange peut ainsi actionner par énergie cinétique une turbine génératrice 14 de type axial ou de type Pelton par exemple, sans l'endommager, et avec un excellent rendement.

Lorsque le fluide extrait à la pression P2 est du gaz CO2, la turbine 14 est une turbine axiale adaptée pour fonctionner avec le gaz CO2 et capter l'énergie cinétique du flux de gaz.

En effet, le mélange extrait de la nappe souterraine 3 se présente sous forme d'une émulsion d'eau, d'huile et graisse, d'éthanol, méthanol, isopropanol, acétone (40 à 2000 µg/l), de chlorure de sodium (NaCl :1000 à 400 000 µg/l), de sulfure d'hydrogène (H2S), de dioxyde de carbone (CO2), de sables et de fragments de roche.

Un tel mélange de ces éléments peut causer l'impossibilité de passage par une turbine pour raisons de corrosion, de viscosité, de densité, et de frottements, si la qualité d'eau n'est pas assez importante, c'est-à-dire si le rapport huile/eau est supérieur à une valeur seuil déterminée.

Un mélange extrait de qualité acceptable pour le turbinage direct illustré aux figures 1 et 2 devra donc présenter des niveaux très bas de sels, de sables/fragments de roche, et autres huiles. Il devrait également présenter une permittivité élevée entre 60-80 et une viscosité très basse permettant ainsi le passage en turbine. Un mélange d'une telle composition pauvre en huile se rencontre lorsque la nappe et très épuisée.

Cependant, il peut arriver que l'extraction pétrolière s'arrête avant que le mélange extrait ne présente un tel rapport huile/eau, par exemple parce qu'une telle exploitation n'est déjà plus rentable.

La pression de l'eau est également une donnée importante pour identifier la possibilité d'utiliser le mélange extrait directement en turbinage. En effet, si la composition est adaptée, mais que la pression de sortie (c'est-à-dire du mélange extrait au niveau de la première tubulure 11) est insuffisante, le rendement de l'installation selon l'invention pourrait ne pas être suffisamment rentable.

Le mode de réalisation des figures 3 et 4 permet de générer de l'électricité par énergie cinétique, alors même que le mélange extrait ne présente pas un rapport huile/eau compatible avec l'utilisation d'une turbine génératrice ou que la pression d'extraction est insuffisante, c'est-à-dire inférieure à une pression d'extraction seuil.

Dans ce mode de réalisation, l'installation comprend, en outre, entre la première tubulure 11 et la turbine génératrice 14, c'est-à-dire en amont de la turbine génératrice 14, mais en aval de la nappe souterraine 3, un séparateur 18 eau/huile pétrolifère.

Ce séparateur permet de séparer l'huile pétrolifère de l'eau. Il comprend une conduite 19 d'huile pétrolifère vers un réservoir 20 d'huile pétrolifère, et une conduite d'eau 21 vers un réservoir d'eau 22.

Ce dernier est relié à la turbine génératrice 14 par une tubulure 23 et agencé à une hauteur H déterminée par rapport à la turbine génératrice 14 pour que l'eau tombe par gravité dans la turbine génératrice.

La hauteur H déterminée est définie en fonction de la typologie de la plateforme et de sa structure, mais devra permettre une chute d'eau supérieure à 10 mètres, de préférence comprise entre 10 mètres et 30 mètres, en fonction des spécificités de la turbine. La hauteur dépend aussi de la structure de la plateforme et des objectifs de puissance à obtenir par la turbine génératrice 14.

De préférence, la hauteur minimale H du réservoir 22 par rapport à la turbine génératrice 14 est déterminée pour permettre la production d'au moins 50 MegaWatt de puissance en totale.

Ainsi, dans ce mode de réalisation, et par rapport au mode de réalisation des figures 1 et 2, la production d'électricité comprend, entre l'étape d'extraction du mélange hors de la nappe et l'étape de turbinage au cours de laquelle on fait circuler le mélange extrait de manière à actionner par énergie cinétique la turbine génératrice d'électricité, une étape de séparation de l'huile pétrolifère et d'eau lorsque le rapport huile/eau dans le mélange est supérieur à une valeur seuil déterminée, et une étape de stockage temporaire de l'eau obtenue à une hauteur minimale H déterminée par rapport à la turbine génératrice.

Dans ce mode de réalisation, la turbine génératrice est avantageusement une turbine de type Kaplan ou de type Francis, adaptée aux chutes d'eau. D'autres solutions peuvent être agencées avec des turbines modernes telles que des turbines axiales quand il y a de grands volumes de liquide et de faibles hauteurs H. Lorsque le fluide extrait à la pression P2 est du gaz CO2, la turbine 14 est une turbine axiale adaptée pour fonctionner avec le gaz CO2 et capter l'énergie cinétique du flux de gaz.

Dans un mode de réalisation avantageux, illustré en figure 4, l'installation comprend, en outre, une conduite de contournement 30 reliée par une vanne trois voies 31, commandables manuellement ou automatiquement, d'une part à la première tubulure 11 avant le séparateur eau/huile 18 et, d'autre part, soit au réservoir d'eau 22, soit à la conduite 23 alimentant la turbine génératrice 14 depuis le réservoir d'eau 22, soit directement à la turbine génératrice 14.

Dans ce mode de réalisation, on peut prévoir, dans une première variante, un changement de turbine 14 entre la phase dans laquelle on utilise le séparateur 18 et le réservoir 22 (turbine de type Kaplan ou de type Francis), et la phase dans laquelle le fluide extrait de la nappe est envoyé au travers de la conduite de contournement 30 (turbine de type Pelton).

Alternativement, et de préférence, on choisira dans une deuxième variante, une turbine de type axiale dès la conception du mode de réalisation dans lequel on doit séparer préalablement l'huile et l'eau, car ce type de turbine peut fonctionner à basse pression en recevant l'eau depuis le réservoir, ou à haute pression en recevant l'eau directement depuis la nappe, moyennant éventuellement quelques modifications dans les conduites à la portée de l'homme du métier.

La conduite de contournement 30 permet de diriger directement le mélange extrait de la nappe souterraine vers la turbine génératrice 14, pour un fonctionnement identique à ce qui a été décrit en relation avec le mode de réalisation des figures 1 et 2, lorsque le mélange extrait présente un rapport huile/eau inférieur à la valeur seuil déterminée, au-delà de laquelle une séparation huile/eau est nécessaire.

De préférence, ce basculement entre les deux modes de fonctionnement (avec et sans séparation huile/eau) se fait automatiquement. En effet, la composition du mélange extrait peut varier au cours du temps.

À cette fin, l'installation selon l'invention comprend avantageusement un capteur 33 de la composition du mélange extrait (par exemple un capteur de viscosité) et une unité centrale 32 programmée pour déterminer le rapport huile/eau dans le mélange extrait, le comparer à une valeur seuil déterminée stockée en mémoire, et pour commander les vannes 31 via des connexions 34, de manière à faire circuler le mélange extrait par la conduite de contournement 30 directement depuis la première tubulure 11 vers la turbine génératrice 14 lorsque le rapport huile/eau dans le mélange extrait est inférieur à la valeur seuil déterminée.

En d'autres termes, on supprime les étapes de séparation de l'huile et de l'eau (et éventuellement de stockage de l'eau produite) lorsque la proportion d'huile dans le mélange devient inférieure à la valeur seuil déterminée.

Lorsque le mélange extrait est passé une première fois dans la turbine (soit tel quel, soit après séparation de l'huile et de l'eau), il est réinjecté directement dans la nappe par la pompe. L'ajout de fluide extracteur, n'est alors nécessaire que pour compléter les pertes de fluide dans le circuit et pour gérer les valeurs de P1 et P2.

De préférence, l'organe 16 et/ou le réseau électrique comprennent une réserve de stockage d'électricité par exemple sous la forme de batteries.

L'objectif reste que la plupart de l'énergie électrique soit envoyée vers l'extérieur de la plateforme, par exemple vers d'autres plateformes voisines nécessitant de l'énergie ou bien injectée dans le réseau général sur la côte.

L'injection d'énergie électrique en courant alternatif AC dans le réseau général est, à ce jour, économiquement acceptable si la plateforme est localisée à moins de 80km de la côte.

Dans ce cas il faudra installer une station de transformation à niveau 132kV sur la plateforme. Puis la station sera connectée au réseau général par des câbles sousmarins en 1 32kV AC qui seront placés entre la plateforme et la côte.

L'invention permet ainsi de créer une source d'énergie renouvelable, continue, flexible, à la demande et non intermittente, grâce à la création d'une boucle de circulation fluidique d'eau ou de gaz (tel que du CO2 par exemple) entrant et sortant d'une nappe souterraine.

## Revendications

1. Procédé de production d'électricité avec une installation d'extraction pétrolière existante (10) agencée pour extraire de l'huile pétrolifère et de l'eau à partir d'une nappe souterraine (3), **caractérisé en ce qu'**il comprend les étapes suivantes :
a) on extrait par une première tubulure d'extraction (11) un mélange d'huile pétrolifère et d'eau issu de la nappe souterraine (3) sous une pression P2 ;
d) on fait circuler le mélange extrait de manière à actionner par énergie cinétique une turbine génératrice d'électricité (14) pour générer de l'électricité ;
e) on alimente un réseau électrique (17) avec au moins une fraction de l'électricité générée par la turbine génératrice (14).

2. Procédé de production d'électricité selon la revendication 1, comprenant, entre l'étape a) et l'étape d), une étape b) de séparation de l'huile pétrolifère et de l'eau lorsque le rapport huile/eau dans le mélange issu de la nappe (3) est supérieur à une valeur seuil déterminée, et une étape c) de stockage temporaire de l'eau obtenue à une hauteur (H) minimale déterminée par rapport à la turbine génératrice (14).

3. Procédé de production d'électricité selon l'une quelconque des revendications 1 ou 2, comprenant, en outre, une étape f) d'injection d'un fluide extracteur sous une pression P1 dans la nappe souterraine (3) avec une pompe d'injection (13), via une deuxième tubulure d'injection (12).

4. Procédé de production d'électricité selon la revendication 3, dans lequel la pression P1 est ajustée pour maintenir la pression P2 à une valeur déterminée pour actionner par énergie cinétique la turbine génératrice d'électricité (14) pour générer de l'électricité.

5. Procédé de production d'électricité selon l'une quelconque des revendications 3 ou 4, dans lequel le fluide extracteur comprend au moins une partie du mélange extrait à l'étape a).

6. Procédé de production d'électricité selon l'une quelconque des revendications 3 à 5, dans lequel on alimente en électricité la pompe d'injection (13) avec au moins une fraction de l'électricité générée par la turbine génératrice (14), pour répéter les étapes a) à e).

7. Procédé de production d'électricité selon l'une quelconque des revendications 3 à 6, dans lequel le fluide extracteur comprend du gaz CO2, une partie du mélange extrait, et/ou de l'eau de mer.

8. Procédé de production d'électricité selon la revendication 2, dans lequel les étapes b) et c) sont supprimées lorsque la proportion d'huile dans le mélange extrait devient inférieure à la valeur seuil déterminée.

9. Équipement de production d'électricité pour une installation d'extraction pétrolière existante (10), agencée pour extraire un mélange d'huile pétrolifère et d'eau à partir d'une nappe souterraine (3), l'installation d'extraction pétrolière comprenant une première tubulure (11) d'extraction du mélange d'huile et d'eau issu de la nappe souterraine (3) sous une pression P2, l'équipement étant **caractérisé en ce qu'**il comprend :
• une turbine génératrice d'électricité (14) en connexion fluidique avec la première tubulure (11), et actionnable par énergie cinétique lorsque du mélange extrait de la nappe souterraine (3) la traverse pour générer de l'électricité ;
• un circuit électrique (15) entre la turbine (14) et un organe (16) de stockage et/ou de transmission de l'électricité générée par la turbine.

10. Équipement de production d'électricité selon la revendication 9, comprenant, en outre, avant la turbine génératrice (14), un séparateur eau/huile pétrolifère (18) duquel partent une conduite d'huile pétrolifère (19) vers un réservoir d'huile pétrolifère (20), et une conduite d'eau (21) vers un réservoir d'eau (22), le réservoir d'eau (22) étant relié de manière fluidique par une tubulure (23) à la turbine génératrice (14), et agencé à une hauteur (H) déterminée par rapport à la turbine génératrice (14) pour que l'eau tombe par gravité dans la turbine génératrice et l'actionne par énergie cinétique.

11. Équipement de production d'électricité selon la revendication 10, comprenant, en outre, une conduite de contournement (30) reliée par une vanne (31) d'une part à la première tubulure (11) avant le séparateur eau/huile (18) et d'autre part à la tubulure (23) alimentant la turbine génératrice (14) depuis le réservoir d'eau (22).

12. Équipement de production d'électricité selon la revendication 10, comprenant, en outre, une conduite de contournement (30) reliée par une vanne (31) d'une part à la première tubulure (11) avant le séparateur eau/huile (18) et d'autre part au réservoir d'eau (22).

13. Équipement de production d'électricité selon la revendication 10, comprenant, en outre, une conduite de contournement (30) reliée par une vanne (31) d'une part à la première tubulure (11) avant le séparateur eau/huile (18) et d'autre part à la turbine génératrice (14).

14. Équipement de production d'électricité selon l'une quelconque des revendications 11 à 13, comprenant, en outre, au moins un capteur (33) de la composition du mélange extrait et une unité centrale (32) programmée pour déterminer le rapport huile/eau dans le mélange extrait, le comparer à une valeur seuil déterminée stockée en mémoire, et pour commander les vannes (31) de manière à faire circuler le mélange extrait via la conduite de contournement (30) directement depuis la première tubulure d'extraction (11) vers la turbine génératrice (14) lorsque le rapport huile/eau dans le mélange extrait est inférieur à la valeur seuil déterminée.

15. Équipement de production d'électricité selon l'une quelconque des revendications 9 à 14, comprenant, en outre, une pompe (13) d'injection de fluide extracteur sous une pression P1 par une deuxième tubulure d'injection (12) dans la nappe souterraine (3), la première tubulure (11) étant reliée de manière fluidique à la pompe d'injection (13) pour former une boucle de circulation fluidique entrant et sortant de la nappe souterraine (3).
